# EUROPEAN PATENT APPLICATION

(11) **EP 2 003 178 A1**
(43) Date of publication of application: **17.12.2008**
(21) Application number: 08010112.4
(22) Date of filing: 03.06.2008
(51) Int. Cl.: C09J 7/02, B32B 27/32, B32B 37/08

(54) **Release liner and pressure-sensitive adhesive sheet comprising same**

(30) Priority: 04.06.2007 JP 2007148524
(71) Applicant: NITTO DENKO CORPORATION, Ibaraki-shi, Osaka 567-8680 (JP)
(72) Inventor: Ukei, Hiroichi, Ibaraki-shi Osaka 567-8680 (JP); Nakagawa, Yoshio, Ibaraki-shi Osaka 567-8680 (JP); Ikishima, Shinsuke, Ibaraki-shi Osaka 567-8680 (JP)
(74) Representative: Grünecker, Kinkeldey, Stockmair & Schwanhäusser Anwaltssozietät

(57) **Abstract**

The present invention provides a release-lined PSA sheet 1 comprising a release liner 10 with a structured release surface 10A; and a PSA sheet 20 having a PSA layer 24 placed on the release surface 10A. At least the release surface 10A side of the liner 10 is constituted with a release layer 12. The release layer 12 is formed by extruding a release-layer forming material containing a silicone-modified polyolefin resin in which silicone is chemically bonded to the olefin polymer. This liner 10 may provide smooth release when peeled from the PSA sheet 20.

## Description

### BACKGROUND OF THE INVENTION

### 1. Field of the Invention

The present invention relates to a release liner used for a pressure-sensitive adhesive (PSA) sheet. In particular, it relates to a release liner having a structured surface (release surface). It also relates to a PSA sheet comprising this release liner.
The present application is filed claiming the benefit of the priority based on Japanese Patent Application No. 2007-148524 filed on June 4, 2007, the entirety of which is incorporated herein by reference.

### 2. Description of the Related Art

For good air bubble elimination at time of attaching a PSA sheet, has been developed a PSA sheet with a release liner (release-hned PSA sheet), wherein a surface (release surface) of the release liner is provided with a structure (ridges and grooves) so that the structure is transferred to the PSA layer. Art relating to such a structured release liner and a PSA sheet comprising the same is described in Japanese Utility Model Application Publication No. H06-20043 and Japanese Patent Application Publication No. 2004-506777.

Conventionally, in preparing a release liner (hereinafter, may be referred to just as a "liner") with a structured release surface, just so in preparing a typical liner with a smooth release surface (i.e., provided with no structures), a known release agent is applied to the release surface to impart desired release properties to the surface (paragraph 0028 of JP H06-20043 and paragraph 0022 of JP 2004-506777).

### SUMMARY OF THE INVENTION

However, it is more troublesome to apply a release agent evenly to a structured surface than to a smooth surface and thus the applied amount (deposited amount) of the release agent may vary from part to part. Such variations in the applied amount is not preferred since they may result in unstable release performance when applying the PSA sheet prepared with this release liner (when the release liner is removed from the PSA sheet). Further, when the coating amount of releases agent is not uniform, the release agent is likely to dry insufficiently resulting sometimes in a defect such as transfer of the wet release agent into the PSA layer.

In another way to provide release properties to a structured release surface, release agent can be applied to a sheet (liner substrate) with a smooth surface and a mold having a structured surface can be pressed with heating (hot-press method) so as to provide a structure to the surface pre-coated with release agent (release surface). However, this method tends to transfer a poorly-defined impression of the mold structure to the surface pre-coated with release agent (release surface) and formation of a well-defined release surface is difficult. Furthermore, if the applied amount of release agent is insufficient, hot-pressing may give rise to unstable release performance. On the other hand, in attempts to prevent this, if an excess amount of release agent is applied, transfer of the release agent into the PSA layer is likely to occur.

An objective of the present invention is thus to provide a release liner that has a structured release surface and that exhibits stable release performance and further provide a method for producing the same. Another objective of the present invention is to provide a release-lined PSA sheet comprising this release liner.

The present invention provides a release liner with a structured release surface (typically a release liner to be placed on a PSA layer of a PSA sheet). This release liner comprises a release layer that constitutes at least the release surface side of the liner. The release layer is formed by molding (typically by extruding) a release-layer forming material containing a silicone-modified polyolefin resin in which silicone is chemically bonded to the olefin polymer.
A release liner of such a configuration provides excellent release performance because the structure is formed of a material containing a predetermined silicone-modified polyolefin resin and thus separate surface treatment (further treatment) to apply a release agent is unnecessary. According to the release liner disclosed herein, a uniform release property (releasing ability) is provided throughout the structured release surface by taking advantage of the nature of the material (release-layer forming material) itself Hence, a release-lined PSA sheet comprising this liner provides release performance that is more stable (consistent, i.e., smooth). Furthermore, because it uses a silicone-modified polyolefin resin in which silicone is chemically bonded to the olefin polymer, as opposed to a product prepared from a material in which an additive such as silicone oil (silicone component) is merely mixed with a polyolefin resin, bleeding of the silicone component is unlikely to take place. This is preferred since it contributes to prevent the silicone component from transferring into the PSA layer in the release-lined PSA sheet with this liner.

The silicone content of the release layer is preferably in the range of 10 mass% to 30 mass%. A liner comprising a release layer having such a composition (typically, a release layer formed of a material with a silicone content in the preferred range as described above) provides at a good balance a well-structured release layer (for instance, definition of the structure) as well as consistent and excellent release performance (releasing ability) from a PSA sheet constructed with this liner

In a preferred embodiment of the liner disclosed herein, the structure of the release surface comprises projections (typically, ridges or the like) with a height of 5 µm to 50 µm and a width of 30 µm to 150 µm. It has been especially difficult to evenly apply a release agent coat to a release surface having such a relatively fine structure. Therefore, in the liner with a release surface having such a structure, a manifestation of the effects by the use of the configuration of the present invention may be more pronounced.

In a preferred embodiment of the liner disclosed herein, the projections (for example, ridges with a height of 5 µm to 50 µm and a width of 30 µm to 150 µm) are formed in a grid pattern. It has been especially troublesome to evenly apply a release agent coat to such a release surface with ridges in a grid pattern because release agent tends to accumulate at the intersections of the ridges (nodes of the grid). Therefore, in the liner with a release surface having such a structure, a manifestation of the effects by the use of the configuration of the present invention may be more profound.

Preferred examples of the silicone-modified olefin resin used as a component of the release-layer forming material include a silicone-modified polypropylene resin in which silicone is chemically bonded to the propylene polymer. For example, can be preferably used a release-layer forming material containing such a silicone-modified polypropylene resin and a polypropylene resin with no silicone modification (having no silicone chains). A preferred release-layer forming material can be obtained by blending these resins so as to have a silicone content of, for instance, about 10 mass% to 30 mass%.

The liner disclosed herein may further comprise a support layer laminated on the back of the release layer (i.e., the opposite side of the release surface). In a liner having such a configuration, the combination of the support layer and release layer allows the properties of the liner at large (for example, strength, heat resistance and the like) to be adjusted over broader ranges. Furthermore, by selecting an appropriate material for the support layer, the cost of the liner material can be reduced.

Such a liner having a configuration of a release layer laminated with a support layer can be obtained for instance by oo-extruding the support-layer forming material and the release-layer forming material. Therefore, as another aspect, the present invention provides a method for producing a release liner, comprising co-extruding a release-layer forming material and a support-layer forming material. This co-extrusion method is preferred because it may efficiently produce a release liner having a release layer and support layer with a tight joint (good adherence).

The present invention provides a method for producing a release liner with a structured release surface in which at least the release surface side of the release liner is constituted with a release layer. The production method comprises preparing a release-layer forming material containing a siheone-modified polyolefin resin in which silicone is chemically bonded to the olefin polymer. It also comprises melting the material by heat and extruding the same. It further comprises providing the release layer with a surface structure by cooling and solidifying into a layer the material extruded in the heat-melted state. This production method may be preferably employed as a method for producing the release liners disclosed herein.

In a preferred embodiment, when cooling and solidifying the release-layer forming material, the material extruded in the heat-melted state is subjected to contact with a cooling body having a structured surface and cold-pressed. This creates a release layer with a surface structure which is transferred from the cooling body surface. According to this method, can be produced efficiently a release layer (release liner) that has a release surface with a well-defined prescribed structure and that provides stable release performance.

Moreover, the present invention provides a release-lined PSA sheet comprising any of the release liners disclosed herein (may be a release liner produced by a method disclosed herein) and a PSA layer disposed on the release surface of the liner (typically, a PSA layer having a surface structure corresponding to the structure of the release surface). A release-lined PSA sheet of such a configuration is constructed with any of the liners disclosed herein and thus may exhibit more stable release performance.

### BRIEF DESCRIPTION OF THE DRAWINGS

FIG. 1 shows a cross section that schematically illustrates an example of the configurations of the release-lined PSA sheet according to the present invention.
FIG. 2 shows a cross-section that schematically illustrates another example of the configurations of the release-lined PSA sheet according to the present invention.
FIG. 3 shows a schematic diagram that illustrates an example of the construction of a release-liner forming apparatus.

### DETAILED DESCRIPTION OF THE INVENTION

Hereinafter, preferred embodiments according to the present invention will be described. The matter which is other than that specifically referred to in this specification, but is necessary for carrying out the present invention, may be understood as a matter of design choice for those skilled in the art based on the conventional art. The present invention can be carried out based on the contents disclosed in this specification and the technological common knowledge in the art.

The release liner disclosed herein is typically used as a constituent of a release-lined PSA sheet comprising a PSA sheet having a PSA layer; and a liner disposed on the PSA layer.
The PSA sheet that constitutes the release-lined PSA sheet typically comprises a support and a PSA layer backed by the support. The PSA sheet of this configuration may have a PSA layer on one side or both sides of a sheet support (substrate), for example. The PSA sheet may be composed of a PSA layer alone, but no support (i.e., substrate-less PSA sheet). The concept of the PSA sheet here may include so-called PSA tapes, PSA labels and PSA films and the like. The PSA layer is not limited to be in a continuous form, but may be, for instance, in a random or regular pattern of dots, stripes or the like.

At least the release surface side of the release liner that constitutes the release-lined PSA sheet is constructed with a release layer formed of a prescribed release-layer forming material The release liner may be constructed entirely with this release layer or may include a support layer laminated on the back side of the release layer (in other words, on the opposite side from the structured surface (release surface)).
The release-layer forming material used to form the release layer contains a silicone-modified polyolefin resin in which silicone is chemically bonded to the olefin polymer. The term olefin polymer here refers to a polymer of which the primary monomer (principal component of the monomers) is an olefin such as ethylene, propylene or the like. The term silicone here refers to a polymer having a main chain structured mainly with siloxane bonds (polysiloxane) and silicone with a polyorganosiloxane main chain (for example, polydimethylsiloxane) is preferably used.

Preferred examples of the sfficone-modified polyolefin resin include a silicone-grafted polyolefin resin in which a polymer chain structured mainly with siloxane bonds is introduced (grafted) to a polymer chain of which the main monomer is an olefin (for instance, propylene). Such a silicone-grafted polyolefin resin can be obtained by, for instance, mixing with added heat a polyolefin resin and silicone having reactive functional group (preferably, silicone in which functional group such as alkenyl group is bonded at least to a silicon atom(s) at one or both terminals of the silicone chain). Examples of the silicone having reactive functional group include polydimethylsiloxane of which the both terminals are capped with dimethyl-vinylsiloxyl group; a copolymer of polydimethylsiloxane and methylvinylsiloxane of which the both terminals are capped with dimethylvinylsiloxyl group; and the like. Preferred examples of the polyolefin resin (polyolefin component) making up the silicone-grafted polyolefin resin include polypropylene resins (hereinafter may be referred to as "PP resins").

A silicone-grafted polyolefin resin that is preferably used usually has a silicone content of about 5 mass% or greater. It is more preferred to have a silicone content of about 10 mass% or greater. In a release layer formed of a release-layer forming material containing a silicone-grafted polyolefin resin, if the silicone content is excessively low, the releasing ability of the release surface tends to be insufficient (the peel strength of the liner tends to be higher). The upper limit of the silicone content of silicone-grafted polyolefin resin is not particularly limited, but is preferred to be about 70 mass% or less (typically about 5 mass% to 70 mass%) in terms of production ease and obtainability of the resin. For example, can be used preferably a silicone-grafted polyolefin resin with a silicone content of about 50 mass% or less (typically, about 10 mass% to 50 mass%, for instance, about 40 mass%). The silicone content (mass%) of silicone-grafted polyolefin resin here refers to the mass ratio of the portion having a silicone structure (silicone chain) with respect to the total mass of the silicone-grafted polyolefin resin.

Such a silicone-grafted polyolefin resin (typically, silicone-grafted polypropylene resin) can be prepared easily based on heretofore known articles (for example, Japanese Patent Application Publication Nos. H08-127660 and 2000-232950) and technological common knowledge. Alternatively, a commercial product can be obtained easily. Commercial silicone-modified polypropylene resins that can be used preferably in the present invention include, for instance, trade names "BY-201" and "BY27-201C" available from Dow Corning Toray. Other commercial silicone-modified polyolefin resins that can be used in the present invention include, for example, trade names "BY27-202H" and "BY27-213", silicone-modified polyethylene resins available from Dow Corning Toray.

The release-layer forming material used to form a release layer in the technology disclosed herein may be of a composition containing essentially only the above-mentioned silicone-modified polyolefin resin or may be of a composition containing "another resin" in addition to the silicone-modified polyolefin resin as the polymer component (resin component). For the "another resin", it is preferred to select a resin that has good compatibility with the silicone-modified polyolefin resin to be used in combination. Examples of the another resins include polyolefin resins such as polypropylene resins, polyethylene resins, ethylene-propylene copolymers (EPM), and ethylene-propylene-diene copolymers (EPDM). Can be used preferably a polyolefin resin of which the primary monomer is an olefin that is the same kind as the primary monomer (olefin) constituting the polyolefin component of the silicone-modified polyolefin resin. For instance, a combination of a silicone-modified polypropylene resin and a polypropylene resin is preferred.

In this Specification, "polypropylene resin (PP resin)" (including a polypropylene resin used as a material (modification target) to produce a silicone-modified polypropylene resin) refers to a resin composition in which the base polymer (main component of the polymer components) is a propylene polymer in which the primary monomer (the principal component of the monomer components) is propylene. The concept of the "propylene polymer" encompasses both a homo-polymer of propylene (homo-propylene, typically isotactic polypropylene) and copolymer of propylene and another monomer (for example, one, two or more selected from α-olefins having 2, or 4 to 10 carbon atoms). The copolymer can be a random copolymer (random polypropylene) or a block copolymer. It can be a polypropylene resin containing at an arbitrary ratio two or more kinds of propylene polymers (for instance, a combination of a homo-polypropylene and random polypropylene, a combination of two kinds of random polypropylenes whose copolymer compositions are different from each other, or the like).

The silicone content of the release-layer forming material and that of the release layer are preferably about 5 mass% or greater, and more preferably about 10 mass% or greater. If these silicone contents are excessively low, the releasing ability of the release surface tends to be insufficient (the peel strength of the liner tends to be higher). The upper limit of the silicone content is not particularly limited, but a release-layer forming material and a release layer having a silicone content of about 50 mass% or less (typically, about 5 mass% to 50 mass%) are preferred in terms of production ease of the release layer (such as definition of the structure) and the material cost. For example, a release-layer forming material with a silicone content of about 30 mass% or less (typically, about 10 mass% to 30 mass%) can be preferably used. Here, the silicone content (mass%) of release-layer forming material refers to, with respect to the total mass of the release-layer forming material to be used, the mass percentage of the portion having a silicone structure (silicone chain) contained in the silioone-modified polyolefin resin composing the release-layer forming material. Hence, in a release-layer forming material composed only of a silicone-modified polyolefin resin, the silicone content of release-layer forming material equals the silicone content of silicone-modified polyolefin resin. It is preferred to set the ratio of the silicone-modified polyolefin resin to the other resin (typically, a resin having no silicone chains) so as to obtain a release-layer forming material with a silicone content in the preferred range disclosed herein. Alternatively, it is preferable to use a silicone-modified polyolefin resin having a silicone content in the preferred range by itself The silicone content (mass%) of release layer refers to the mass percentage of the portion having a silicone structure (silicone chain) contained in the mass of the release layer. Typically, this equals generally the silicone content of release-layer forming material.

As far as the effects of the present invention are not seriously degraded, the release-layer forming material may contain as needed various components generally known as additives for a resin forming material. Examples of such components include antioxidant, neutralizers, thermal stabilizers, photo stabilizers, UV absorbers, anti-static agent, slip agents, anti-blocking agents, colorants (pigments, dyes and the like) and so on.

The surface of the release layer constituting the release liner disclosed herein (i.e., the surface on the side to be placed in contact with the PSA layer when the release liner is used as a constituent of a release-lined PSA sheet) is formed to have a structure that may be regular or random (typically, regular). The range having the structure may cover essentially the entire area of the release surface or a partial area of the same (for instance, a partial area of the width and/or length).

The structure of the release surface may be, for example, in a form of a plurality of projections (ridges) extending in parallel to each other and distributed at a predetermined pitch (interval between adjacent ridges). It may have a first group of ridges extending in parallel to each other in one direction and a second group of ridges extending in parallel to each other in a direction intersecting (typically, intersecting perpendicularly) the direction of the first group. It may have third, fourth and so on groups of ridges. When a release liner provided with such a structure on the release surface is used as a constituent of a release-lined PSA sheet, the structure is transferred onto the PSA layer of the PSA sheet. This provides the PSA sheet with good air elimination property. Alternatively a PSA layer formed on a release liner with a structured surface may be transferred to a support to prepare a PSA sheet with good air elimination property.

The cross section of each ridge (the cross section taken perpendicularly with respect to the extending ridge) constituting the group of ridges may be, for example, rectangular, trapezoidal (typically, the upper side is shorter than the lower side), inverted V-shaped, inverted U-shaped, semicircular or the like. The height of the ridge may be, for example, about 5 µm to 50 µm (preferably about 10 µm to 35 µm). The width of the ridge (typically the width of the bottom of the ridge) may be, for example, 30 µm to 150 µm with 50 µm to 100µm preferred. In a release liner having a release surface with this kind of a structure (ridges), a manifestation of the effect (effect to make the release performance smooth) by the application of the present invention may be particularly pronounced. Cross sections (height, width, etc.) of ridges may be uniform or varied. For example, cross sections of ridges can be mostly uniform. Ridges with varied cross sections can be distributed regularly or randomly as well. The width of a recessed area formed between adjacent ridges constituting the ridge group may be, for example, about 200 µm to 800 µm (preferably about 400 µm to 600 µm). When a plurality of ridge groups extend in directions intersecting each other, the cross sections of the ridges within each group may be uniform or varied. The pitch of the ridges within each group may be constant or varied.

In one preferable embodiment, essentially the entire area of the release surface is provided with a first and second groups of ridges intersecting perpendicularly to each other. The ridges of the same group have a common cross section and the ridges of the first group and the ridges of the second group share a common cross section as well. The cross section is generally trapezoidal with the upper side being shorter than the lower side. In particular, for example, the height is about 5 µm to 50 µm, the length of the lower side is about 30 µm to 150 pm, the length of the upper side is about 10 µm to 100 µm (though shorter than the lower side). The pitch of the ridges of the first group equals approximately (typically exactly) that of the ridges of the second group and both are preferably about 200 µm to 800 µm (for instance, about 400 µm to 600 µm). In a release liner having a release surface with this kind of a structure (ridges in a grid pattern), a manifestation of the effect (effect to make the release performance smooth) by the application of the present invention may be particularly pronounced. Moreover, such a release liner having a structured release surface as a constituent of a release-lined PSA sheet can be used to provide the PSA sheet with especially good air elimination property By transferring the PSA layer formed on the release liner having this structure, can be produced a PSA sheet with especially good air elimination property

The release liner disclosed herein may further comprise a support layer laminated on the back of the release layer. The material constituting the support layer is not particularly limited as long as it provides a practically sufficient joint strength (adherence) between itself and the release layer. For instance, the support layer may be a film (layer), foam, fabric, non-woven fabric or the like formed of various kinds of resin materials. It is also possible to use a metal foil, paper or the like for the support layer.
For constituting the support layer, a support-layer forming material that can be molded into a layer by extrusion can be used preferably. Particularly preferred is the use of a support-layer forming material suited for co-extrusion with a release-layer forming material to produce a release liner having a release layer laminated with a support layer. For example, can be used a support-layer forming material having as the base polymer any material selected from the group consisting of polyolefin resins such as polypropylene resins, polyethylene resins, ethylene-propylene copolymers and the like; polyester resins such as polyethylene terephthalates and the like; aromatic vinyl resins such as polystyrenes; polyimide resins such as nylon and the like; fluorine-containing resins such as polytetrafluoroethylene and the like; ethylene-vinyl acetate copolymer resins; polyvinyl alcohols; polyvinyl chloride; cellulose and the like.

Not especially limited to, but the thickness (the entire thickness) of release liner of the present invention may be, for instance, about 10 µm to 500 µm. The release liner preferably has a thickness of about 50 µm to 300 µm with about 50 µm to 200 µm more preferred. If the thickness of the liner is excessively small, the strength may be insufficient. If it is excessively high, it may lead to reduced ease in release operation or handling. Here the thickness of release liner refers to the thickness measured from the top of the projection of the structured release surface (i.e., the thickness including the projection). When the release liner is made up essentially of the release layer (in other words, a release liner is composed entirely of a release layer), the thickness of the liner equals the thickness of the release layer. In the release liner with a support layer laminated on the back of the release layer, the thickness of the release layer can be about 5 µm to 500 µm with about 10 µm to 300 µm more preferred and 50 µm to 200 µm even more preferred. On the other hand, the thickness of the support layer can be, for example, about 10 µm to 300 µm and it is usually preferred to be about 50 µm to 200 µm.

For constituting a release layer from a release-layer forming material, can be preferably adopted a extrusion (melt extrusion) method wherein the release-layer forming material in a melted state is extruded and the extruded material is fed between cooling bodies such as cooling rolls to form a layered sheet while pressed and cooled.
For example, to produce a release liner composed entirely of a release layer, the release-layer forming material can be pressed and cooled as described above and the extruded material can be molded into a sheet with a thickness desired for the release liner of interest. In this extrusion step, it is preferred to press and cool the extruded release-layer forming material between cooling bodies (rolls etc.) of which the one that comes in contact with the release surface side has a structured surface so as to mold the release layer to have a release surface provided with a structure corresponding to the structure of the cooling body surface (i.e., the structure of the body surface is transferred).
Such a method of producing a release liner, by taking advantage of the releasing ability provided by the silicone component contained in the release-layer forming material (silicone chain contained in a silieone-modified polyolefin resin), can produce, without a separate release treatment such as release agent coating, a release layer (release liner) with a sufficient releasing ability imparted by the properties of the release-forming material itself. By providing the surface (release surface) of the release-layer forming material with a structure simultaneously as the extrusion is carried out, the release layer (release liner) can be formed to have a release surface with a well-defined structure.

For producing a release liner comprising a release layer and a support layer provided on the back of the release layer, can be preferably adopted, for example, a "co-extrusion" method wherein the release-layer forming material and support-layer forming material both melted are extruded in parallel to form ribbons and the extruded ribbons are fed between cooling bodies (rolls etc.) and molded into a sheet while pressed and cooled.

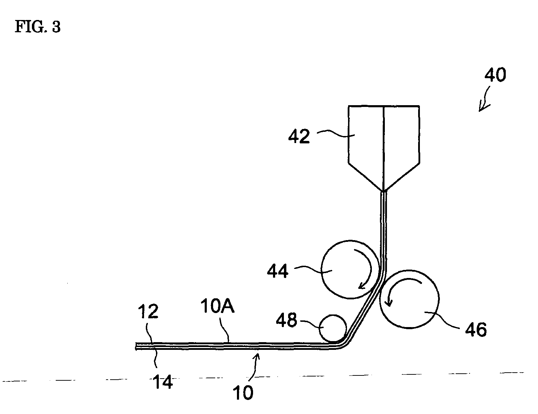

With reference to FIG. 3, a typical embodiment to mold a release liner comprising a release layer and support layer by the above co-extrusion method is described. FIG. 3 shows a release liner forming apparatus (sheet forming apparatus) 40 comprising in general an extrusion-molding device having a T-die 42 and a pair of cooling rolls, i.e., a processing roll 44 and a pressing roll 46, facing each other. The T-die 42 is equipped with a first opening to extrude a release-layer forming material and a second opening next to the first to extrude a support-layer forming material. These materials are placed separately in the extrusion-molding device, heated and melted at a predetermined temperature. The melted release-layer forming material and the support-layer forming material are extruded through the openings of the T-die 42 in parallel to form ribbons (layers) and fed between the cooling rolls 44 and 46.
In this embodiment, the processing roll 44 that comes in contact with the release-layer forming material side of the extruded product is provided with a structure on the surface. Pressing and cooling the extruded product between the processing roll 44 and pressing roll 46 allows the extruded product to solidify as a sheet having surface structures reflecting (transferred from) the surface structures of the processing roll 44 and pressing roll 46. This enables the formation of a release liner 10 comprising two layers composed of a release layer 12 having a release surface with a structure transferred from the surface of the processing roll 44; and a support layer 14 laminated on the back of the release layer. The release liner 10 squeezed out of the cooling rolls 44 and 46 is led to a take-up roll (not shown) via a pick-up roll 48. An elongated sheet of the release liner 10 can be so formed by the co-extrusion of the release-layer forming material and support-layer forming material.
Such a method of producing a release liner, by taking advantage of the releasing ability brought about by the silicone component contained in the release-layer forming material (silicone chain contained in the silicone-modified polyolefin resin), allows formation of a release layer (further a release liner having this release layer on the release surface side) with a sufficient releasing ability imparted by the properties of the material itself By providing the surface of the release-layer forming material with a structure simultaneously as the extrusion is carried out, it is possible to efficiently prepare a release layer having a release surface with a well-defined structure. Moreover, co-extruding the release-layer forming material and support-layer forming material enables efficient production of a release liner comprising a release layer laminated with a support layer. This co-extrusion method is advantageous also because a release liner with an excellent joint strength (adherence) between the release layer and support layer can be obtained easily.

Other ways to laminate a support layer on the back of the release layer include, for example, a method comprising preparing a release layer as a sheet (release layer sheet) by extruding a release-layer forming material by itself providing the back of this release layer sheet with a layer of melted support-layer forming material, and solidifying the resultant by cooling; a method comprising adhering to the back of the release layer sheet a support layer as a sheet (support layer sheet) obtained by extruding a support-layer forming material by itself; and the like.
To provide a release surface having a structure to the release layer, besides the method described above where a heat-melted release-layer forming material is pressed and cooled by a cooling body having a structure on the surface to form a sheet and provide a corresponding structure on the release surface, can be employed, for instance, a method comprising forming a smooth-surface release layer by feeding between a pair of smooth-surface cooling rolls and cold-pressing a release-layer forming material extruded in a heat-melted state; and subsequently pressing (embossing) the release surface with a structured mold while heating to transfer the structure onto the release surface.

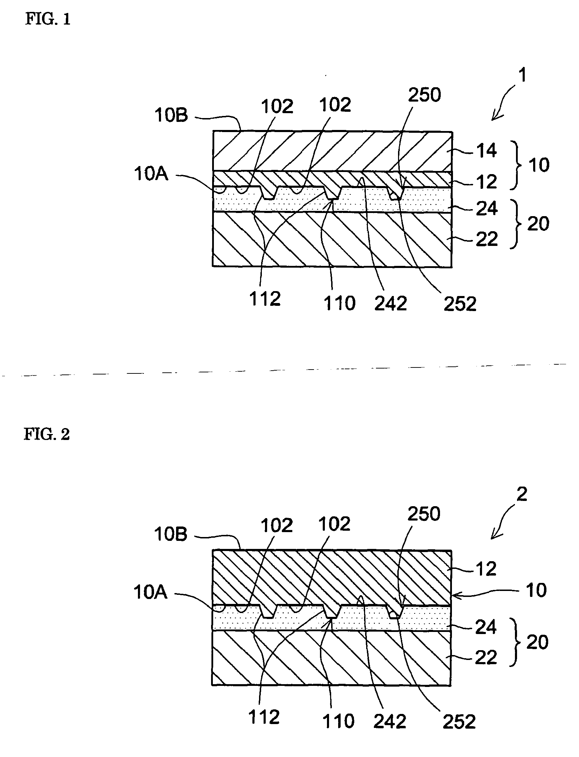

The liner or release-lined PSA sheet disclosed herein may have, for example, a cross section shown schematically in FIG. 1 or 2. Among Figures 1 and 2, the elements having a similar function are assigned a common reference numeral.

FIG. 1 shows a release-lined PSA sheet 1 comprising a PSA sheet 20, which includes a support 22 and a PSA layer 24 on one surface of the support 22; and further comprises a release liner 10 disposed on the PSA layer 24. The liner 10 is formed of two layers composed of a release layer 12 prepared from a release-layer forming material containing a silicone-modified polyolefin resin and a support layer 14 prepared from a support-layer forming material The release liner 10 has a structured release surface 10A In particular, the release surface 10A is provided with a plurality of ridges 112 extending in parallel to each other in one direction and distributed at a predetermined pitch; and further with a plurality of ridges (not shown) extending in the direction perpendicular to the direction of the ridges 112 and distributed at a predetermined pitch (typically the same pitch as that of the ridges 112). Thus, as a whole, a projection 110 in a grid pattern is formed on the release surface 10A Each square surrounded by the projection 110 is a relatively recessed flat area 102. The projection 110 including its base part is formed of a release layer 12 of which the back side is laminated with a support layer 14. This support layer 14 has a smooth surface 10B (the surface opposite from the PSA layer, i.e., the back side).

On the other hand, the surface of the PSA layer 24 that faces the release surface 10A is provided with grooves 252 and grooves (not shown) extending perpendicularly to the grooves 252 matching the structure of the release surface 10A These two sets of grooves intersect each other to form a depression 250 in a grid pattern on the surface of the PSA layer 24 as a whole. Each square surrounded by the depression 250 is a relatively protruding flat surface 242. Peeling the liner 10 from the PSA sheet 20 exposes the PSA layer 24, which displays the grid depression matching the structure (grid projection) of the release surface 10A By pressing the PSA layer 24 onto an adherend with an appropriate force, the protruding flat surface 242 is adhered to the adherend while perpendicularly extending air channels are left between the grid depression 250 and the adherend. Through these channels, can be eliminated air bubbles trapped at time of attaching the PSA sheet 20.

FIG. 2 shows a release-lined PSA sheet 2 comprising a release liner 10, which is a monolayer composed of a release layer 12 formed of a release-layer forming material containing a silicone-moflified polyolefin resin. The rest of the configuration is the same as that of the release-lined PSA sheet 1 shown in FIG. 1.

In accordance with the application purposes of the PSA sheet, an appropriate support can be selected from the following materials: plastic films such as polypropylene film, ethylene-propylene copolymer film, polyester film, polyvinyl chloride film and the like; foam substrates such as polyurethane foam, polyethylene foam and the like; paper such as kraft paper, crepe paper, Japanese paper ("washi") and the like; fabrics such as cotton cloth, staple fiber cloth and the like; non-woven fabrics such as polyester non-woven cloth, vinylon non-woven cloth and the like; and metal foils such as aluminum foil, copper foil and the like. As for the plastic film, either unstretched film or stretched (monoaxially or biaxially stretched) film may be used. Surface treatment such as undercoating, corona discharge or the like may be applied to the support surface that is to retain the PSA layer. The thickness of the support may be appropriately selected in accordance with the purpose, but generally about 10 µm to 500 µm (typically, 10 µm to 200 µm).

The type of PSA to constitute the PSA layer is not limited. The PSA layer may contain one, two or more selected from various conventionally known PSAs which are, for example, acrylic, polyester-based, urethane-based, polyether-based, rubber-based, silicone-based, polyamide-based, and fluorine-based and so on. The form of the PSA is not limited, either, and can be selected from various forms of PSA, such as a solvent type, emulsion type, water-soluble type, ultraviolet-curable type and the like. These PSAs may contain one, two or more of general additives such as tackifiers; viscosity modifiers; leveling agents; plasticizers; fillers; colorants such as pigments, dyes or the like; stabilizers; preservatives; anti-aging agents; antistatic agents; and the like.

In one preferable embodiment, the PSA layer is formed of an acrylic PSA containing an acrylic polymer as the base polymer (main polymer component contained in the PSA). The acrylic polymer is typically a (co)polymer containing, as a main monomer, alkyl (meth)aoylate, i.e., a (meth)acrylic acid ester of alkylalcohol Herein, the term "(meth)acrylic acid" refers to both "acrylic acid" and "methacrylic acid". A preferable PSA layer contains, for example, an acrylic PSA composed mainly of an acrylic polymer comprising a (meth)acrylic acid ester of alkylalcohol as the main monomer, wherein the alkylalcohol has 2 to 14 carbon atoms (more preferably 4 to 10 carbon atoms). Such a PSA layer may be formed of, for example, an acrylic PSA composition containing an acrylic polymer comprising the above-mentioned (co)polymer and optionally containing additives such as a tackifier, cross-linking agent, solvent and the like.

Not especially limited to, the thickness of the PSA layer may be, for example, in the range of about 5 µm to 150 µm (typically about 10 µm to 100 µm). It is preferable that the thickness of the PSA layer contained in the PSA sheet is approximately equal to or greater than the height of the structure on the liner surface (the distance from the tip of the projection to the bottom the depression).

The PSA layer may be formed by, for example, directly applying (typically by coating) an appropriate PSA composition to the support and optionally drying and/or curing the composition (direct method). Then, the release liner is laminated on the PSA layer and pressed as needed, so that the PSA layer reflects the structure of the release surface. Alternatively, the PSA composition may be applied to the release surface of release liner to form a PSA layer on the release surface, and a support can be placed over the liner backing the PSA layer so as to transfer the PSA layer to the support to form a release-lined PSA sheet (transfer method).

### EXAMPLES

Hereinafter, some examples according to the present invention will be described, but the present invention is not limited to these examples. In the following description, the "part(s)" and "%" are based on mass unless otherwise specified.

Each sample was evaluated for the properties described below in the following manners:
Thickness and stx-ucture:
   The total thickness (µm) of each sample was measured using a dial gage with a lower reading limit of 1/1000 mm.
   The thickness of the support layer of each sample was determined by observing at 300 times magnification a cross section showing the thickness under a field emission scanning electron microscope (trade name "S-4800," FE-SEM available from Hitachi High-Technologies Corporation).
   The surface structure of each sample was analyzed by observing the surface under a confocal laser-scanning microscope (trade name "LEXT OLS3000" available from Olympus Corporation).

### Peel strength of liner

A polypropylene sheet of a 100 µm thickness was prepared as the support for a PSA sheet. A coat of an acrylic PSA composition (a product of Nitto Denko Corporation) was applied to one face of the support and dried at 100 °C for one minute to form a PSA layer of about 30 µm thickness (after dried). The above PSA composition was prepared by mixing a 2-ethylhexylacrylate-based solvent-type PSA composition and a coupling agent, 1,3-bis(N,N-diglycidylaminomethyl)cyclohexane (trade name "TETRAD-C" available from Mitsubishi Gas Chemical Company Inc.).
Onto the PSA layer of the so-obtained PSA sheet, a release liner (a sample) was laminated using a laminator (a roll pressure of 0.25 MPa, rolling speed of 0.37 m/min) to form a release-lined PSA sheet. This was stored in an environment at a temperature of 23 °C and a relative humidity of 65 % for 30 minutes and cut into a strip having a width of 50 mm to prepare a test piece. The test piece was evaluated for its lengthwise peeling strength of the liner expressed in N/50-mm using a high speed release tester (a product of Koken Corporation) at a release angle of 90° and peeling speed of 48 m/min. The peel strength measurement was carried out at operating temperatures (surrounding temperatures) of 5 °C, 23 °C and 35 °C.

### Amount of silicone present

The amount of silicon atom (Si) present on the release surface of each sample was determined using an X-ray fluorescence spectrometer (trade name "ZSX100e" available from Rigaku Corporation). The amount of Si atom was converted to the mass of dimethylsiloxane to determine the amount of silicone present on the release surface (g/m²).

### Distribution of Si

Distribution of silicon (Si) on the release surface of each sample was analyzed using an energy dispersive X-ray micro analyzer (trade name E1VIAX ENERGY EX-250 available from HORIBA, Ltd.) at an accelerating voltage of 15 kV.

### Example 1: Preparation of release liner (Sample 1)

In this example, for the release-layer forming material, was used a dry-blended material (release-layer forming material A1) containing a silicone-grafted PP resin with 40 % silicone content (trade name "BY27-201" available from Dow Corning Toray; hereinafter, sometimes referred to as "Gr-PP") and a PP resin (trade name "Novatec PP FL6CK" available from Japan Polypropylene Corporation; hereinafter, sometimes referred to as "PP") at a mass ratio Gr-PP/PP of 25 to 75. The silicone content of the release-layer forming material A1 was 10 %.
For the support-layer forming material, was used a blended material (support-layer forming material B1) containing the above-described PP resin (Novatec PP FL6CK) and linear low-density polyethylene (trade name "Sumikasen G201" available from Sumitomo Chemical Co., Ltd.; hereinafter, sometimes referred to as "LDPE") at a mass ratio PP/LDPE of 100 to 10.

By co-extruding (dual extruding) these materials A1 and B1, was prepared a release liner having two layers composed of a release layer formed of the release-layer forming material A1 laminated on the back with a support layer formed of the support-layer forming material B1. In particular, the above-described materials A1 and B1 were placed in a dual extruder and the melted materials A1 and B1 were extruded into layers from a T-die of the extruder at a die temperature of 240 °C. The extruded product were fed between a processing (cooling) roll with a grid depression on the surface and a pressing (cooling) roll with a smooth surface so that the release-layer forming material A1 was on the processing roll side and the support-layer forming material B1 was on the pressing roll. Pressing and cooling the extruded product between the processing and pressing rolls formed a sheet where the surface of the A1 side of the release-layer forming material was embossed with the surface structure (grid depression) of the processing roll. The release liner of Example 1 (Sample 1) was thus obtained to have a release layer (about 30 µm thickness, 10 % silicone content) with a structured release surface and a support layer (about 160 µm thickness) laminated on the back of the release layer. The release surface had a structure composed of two groups of ridges intersecting each other perpendicularly. The cross section of the ridge was a trapezoid with a 70 µm lower side, 20 µm upper side and 25 µm height The dimensions of each recessed area surrounded by the grid ridges was 450 µm by 450 µm.

### Example 2: Preparation of release liner (Sample 2)

In this example, in place of the release-layer forming material A1 used in Example 1, was used a dry-blended material, release-layer forming material A2 (20 % silicone content), containing the above-mentioned silicone-grafted PP resin and the PP resin at a mass ratio Gr-PP/PP of 50 to 50. Otherwise, the release liner of Example 2 (Sample 2) comprising a release layer formed of the release-forming material A2 and a support layer formed of the support-layer forming material B1 was obtained in the same manner as Example 1.

### Example 3: Preparation of release liner (Sample 3)

In this example, in place of the release-layer forming material A1 used in Example 1, was used a dry-blended material, release-layer forming material A3 (30 % silicone content), containing the silicone-grafted PP resin and PP resin at a mass ratio Gr-PP/PP of 75 to 25. Otherwise, the release liner of Example 3 (Sample 3) comprising a release layer formed of the release-layer forming material A3 and a support layer formed of the support-layer forming material B1 was obtained in the same manner as Example 1.

### Example 4: Preparation of release liner (Sample 4)

In this example, the support-layer forming material B1 used in Example 1 to form the support layer was used as the constituent of the entire release liner. In particular, the material B1 was placed in an extruder, extruded at a die temperature of 240 °C, cooled and molded in the same manner as Example 1 to form the release liner of Example 4 (Sample 4) composed entirely of the material B1 and provided with a grid projection on one surface (release surface).

### Example 5: Preparation of release liner (Sample 5)

To the release surface of the release liner of Example 4 (Sample 4), a release treatment was applied by coating the surface with a commercial silicone-based release agent (trade name "KS-847T" available from Shin-Etsu Chemical Co., Ltd.). The release liner of Example 5 (Sample 5) was so obtained.

Each of Samples 1 to 5 was evaluated for the peel strength of liner, amount of silicone present and distribution of Si by the procedures described above. The results are summarized in Table 1 along with the types of materials used for the preparation of each sample.

**Table 1**

| Sample | 1 | 2 | 3 | 4 | 5 |
|---|---|---|---|---|---|
| Release layer | A1 | A2 | A3 | B1 | B1 coated with agent release agent |
| Support layer | B1 | B1 | B1 | | |
| Amount of silicone (g/m²) | 0.85 | 2.03 | 3.29 | - | 0.60 |
| Si distribution | excellent evenness | excellent evenness | good evenness | - | accumulation excess on grid lines |
| Peel strength of liner (N/50mm) | 0,41 | 0.38 | 0.45 | 0.94 | 0.55 |

As shown in Table 1, Samples 1 to 3 formed of the materials A1 to A3 respectively, each containing a silicone grafted PP resin, all exhibited a good release property (low liner peel strength) despite the lack of a separate release treatment where a coat of release agent is applied to the release surface. Their release properties were found equal to or greater than that of Sample 5, which was formed by applying a coat of a silicone-based release agent to the release surface formed of the material B1 having no silicone components. Furthermore, from the chart of peel strength of each liner, the liner peel strength of any of Samples 1 to 3 was found to be evidently stable (less varied) as compared to that of Sample 5. When the Si distribution of each sample was evaluated, it was apparent that an excess amount of Si was present along the grid ridges in Sample 5 while a significantly improved evenness was observed in the Si distribution for each of Samples 1 to 3. Especially in Samples 1 and 2, the evenness of Si distribution was excellent.

As described above, the release-lined PSA sheet constituted with the release liner of the present invention exhibits a stable liner peel strength while having a structured release surface. This release-lined PSA sheet comprising a release liner with a structured release surface provide good air elimination property at time of attaching the PSA sheet and thus are useful for wide variety of decorative applications. For instance, it is desirable as a paint substitute, decorative sheet, surface-protecting PSA sheet, or the like to be put on the exterior of a vehicle.

## Claims

1. A release liner with a structured release surface, comprising a release layer that constitutes at least the release surface side of the liner,
wherein the liner is formed by extruding a release-layer forming material containing a silioone-modified polyolefin resin in which silicone is chemically bonded to the olefin polymer.

2. The release liner according to claim 1, wherein the silicone content of the release layer is 10 mass% to 30 mass%.

3. The release liner according to claim 1 or 2, wherein the structure comprises projections with a height of 5 µm to 50 µm and a width of 30 µm to 150 µm.

4. The release liner according to claim 3, wherein the projections are formed in a grid pattern.

5. The release liner according to any one of claims 1 to 4, wherein the release-layer forming material contains a silicone-modified polypropylene resin in which silicone is chemically bonded to the polypropylene polymer and a polypropylene resin.

6. The release liner according to any one of claims 1 to 5, further comprising a support layer laminated on the back of the release layer.

7. The release liner according to claim 6, that is formed by co-extruding a support-layer forming material to form the support layer and the release-layer forming material.

8. A method for producing a release liner with a structured release surface of which at least the release surface side is constituted with a release layer, the method comprising:
preparing a release-layer forming material containing a silicone-modified polyolefin resin in which silicone is chemically bonded to the olefin polymer;
extruding the material in a heat-melted state; and
providing the release layer with a surface structure by cooling and solidifying into a layer the release-layer forming material extruded in the heat-melted state.

9. The method according to claim 8, wherein the cooling and solidifying the release-layer forming material is carried out by subjecting the release-layer forming material extruded in the heat-melted state to contact with a cooling body and cold-pressing the same.

10. A pressure-sensitive adhesive sheet with a release liner, comprising the release liner according to any one of claims 1 to 7 and a pressure-sensitive adhesive layer disposed on a release surface of the liner.
